# EUROPEAN PATENT APPLICATION

(11) **EP 2 071 369 A1**
(43) Date of publication of application: **17.06.2009**
(21) Application number: 08830214.6
(22) Date of filing: 10.09.2008
(51) Int. Cl.: G02B 6/00, G02B 6/032

(54) **HOLEY FIBER**

(30) Priority: 10.09.2007 JP 2007234635
(71) Applicant: THE FURUKAWA ELECTRIC CO., LTD., Chiyoda-ku Tokyo 100-8322 (JP)
(72) Inventor: The designation of the inventor has not yet been filed
(74) Representative: Jackson, Martin Peter
(86) International application number: PCT/JP2008/066316
(87) International publication number: WO 2009/034995

(57) **Abstract**

A holey fiber includes a core region formed at a center and a cladding region formed on an outer circumference of the core region. The cladding region has a plurality of air holes arranged in a layered structure around the core region. The air holes are arranged in a triangular lattice so that a wavelength dispersion value at a wavelength of 1050 nm is in a range from -10 ps/nm/km to 10 ps/nm/km when Λ is in a range from 2 µm to 5 µm and d/Λ is in a range from 0.3 to 0.75, where d [µm] is hole diameter of each of the air holes and Λ [µm] is lattice constant of the triangular lattice. With this configuration, a holey fiber that is suitable for an optical transmission line for a long-haul optical transmission in the wavelength band of 1.0 µm is provided.

## Description

### TECHNICAL FIELD

The present invention relates to a holey fiber.

### BACKGROUND ART

A holey fiber or a photonic crystal fiber is a new type of optical fiber that has a core region formed at a center of the optical fiber and a cladding region surrounding the core region and having a plurality of air holes around the core region, where the cladding region has the reduced average refractive index because of the presence of the air holes so that a light propagates through the core region by the principle of the total reflection of light. Because the refractive index is controlled by the air holes, the holey fibers can realize unique properties such as endlessly single mode (ESM) and a zero-dispersion wavelength shifted towards extremely shorter wavelengths, which cannot be realized with conventional optical fibers. The ESM means that a cut-off wavelength is not present and a light is transmitted in a single mode at all wavelengths. With the ESM, it is possible to realize an optical transmission at a high transmission speed over a broad bandwidth.

Meanwhile, a technology for an Ytterbium-doped fiber (YDF) that can be used as an amplified optical fiber in a wavelength band of 1.0 µm with a center wavelength of 1050 nm (e.g., from 1000 nm to 1100 nm) has been more and more developing. Accordingly, a demand for an optical fiber that can be used as, for example, a fiber laser, an optical fiber for an SC light source, or an optical transmission line in the wavelength band of 1.0 µm is growing. The holey fiber is expected to be used to meet such a demand. For example, results of an experiment of optical transmission in a broadband including a wavelength of 1064 nm by using a holey fiber as an optical transmission line is reported in Nonpatent Literature 1.

Nonpatent Literature 1: K. Ieda et al., "Visible to Infrared WDM transmission over PCF", ECOC2006-Tu3.3.4 (2006)

### DISCLOSURE OF INVENTION

### PROBLEM TO BE SOLVED BY THE INVENTION

However, in the conventional holey fiber, a wavelength dispersion value in the wavelength band of 1.0 µm is about -20 ps/nm/km or smaller. That is, its absolute value is relatively large. Therefore, when the conventional holey fiber is used as an optical transmission line for a long-haul transmission of optical signals in the wavelength band of 1.0 µm, the optical signals are extremely distorted, which is problematic.

The present invention has been made to solve the above problems in the conventional technology and it is an object of the present invention to provide a holey fiber that is suitable for an optical transmission line for a long-haul optical transmission in the wavelength band of 1.0 µm.

### MEANS FOR SOLVING PROBLEM

To solve the above problems and to achieve the object, a holey fiber according to the present invention includes a core region formed at a center and a cladding region formed on an outer circumference of the core region. The cladding region having a plurality of air holes arranged in a layered structure around the core region. The air holes are arranged in a triangular lattice so that a wavelength dispersion value at a wavelength of 1050 nm is in a range from -10 ps/nm/km to 10 ps/nm/km when Λ is in a range from 2 µm to 5 µm and d/Λ is in a range from 0.3 to 0.75, where d [µm] is hole diameter of each of the air holes and Λ [µm] is lattice constant of the triangular lattice.

Furthermore, the holey fiber according to the present invention is featured in that, in the above-described invention, Λ is in a range from 2.5 µm to 4.5 µm, d/Λ is in a range from 0.4 to 0.6, number of layers of the air holes is equal to or smaller than seven, confinement loss at the wavelength of 1050 nm is equal to or lower than 0.1 dB/km, and a single-mode operation is achieved at a wavelength of 1000 nm.

Moreover, the holey fiber according to the present invention is featured in that, in the above-described invention, an effective core area at the wavelength of 1050 nm is equal to or larger than 10 µm².

### EFFECT OF THE INVENTION

According to the present invention, it is possible to realize a holey fiber that is suitable for an optical transmission line for a long-haul optical transmission in the wavelength band of 1.0 µm.

### BRIEF DESCRIPTION OF DRAWINGS

[Fig. 1] Fig. 1 is a schematic sectional view of an HF according to an embodiment of the present invention.
[Fig. 2] Fig. 2 is a diagram for illustrating variation in a wavelength dispersion value at a wavelength of 1050 nm when an air hole pitch Λ and a ratio d/Λ where d is hole diameter are changed in the HF shown in Fig. 1.
[Fig. 3] Fig. 3 is a diagram for illustrating variation in an effective core area at the wavelength of 1050 nm when the air hole pitch Λ and the ratio d/Λ are changed in the HF shown in Fig. 1.
[Fig. 4] Fig. 4 is a diagram for illustrating a relationship between the number of layers of air holes and the total number of air holes that are arranged in a triangular lattice.
[Fig. 5] Fig. 5 is a diagram for illustrating design parameters and optical characteristics at the wavelength of 1050 nm with respect to each of HFs according to Calculation Examples 1 to 13.
[Fig. 6] Fig. 6 is a photographic diagram of a cross sectional structure of the HF according to Example of the present invention.
[Fig. 7] Fig. 7 is a diagram for illustrating optical characteristics of each of HFs according to Calculation Example 7 and Example of the present invention in comparison with each other.
[Fig. 8] Fig. 8 is a diagram for illustrating wavelength dispersion characteristics of the HF shown in Fig. 1 when d/Λ is set to 0.50 and Λ is changed from 2.0 µm to 10.0 µm. [Fig. 9] Fig. 9 is a diagram for illustrating characteristics of the HF shown in Fig. 1 at wavelengths of 1050 nm and 1550 nm when d/Λ is set to 0.50 and Λ is changed from 2.0 µm to 10.0 µm.

### EXPLANATIONS OF LETTERS OR NUMERALS

- 10: HF
- 11: core region
- 12: cladding region
- 13: air hole
- L: triangular lattice

### BEST MODE(S) FOR CARRYING OUT THE INVENTION

Exemplary embodiments of a holey fiber of the present invention are explained in detail below with reference to the accompanying drawings. The present invention is not limited to the following embodiments. A holey fiber is referred to as an HF in the following description. Terms and methods used in this document without any specification are based on definitions and measurement methods defined by ITU-T (International Telecommunication Union Telecommunication Standardization Sector) G.650.1.

### (Embodiments)

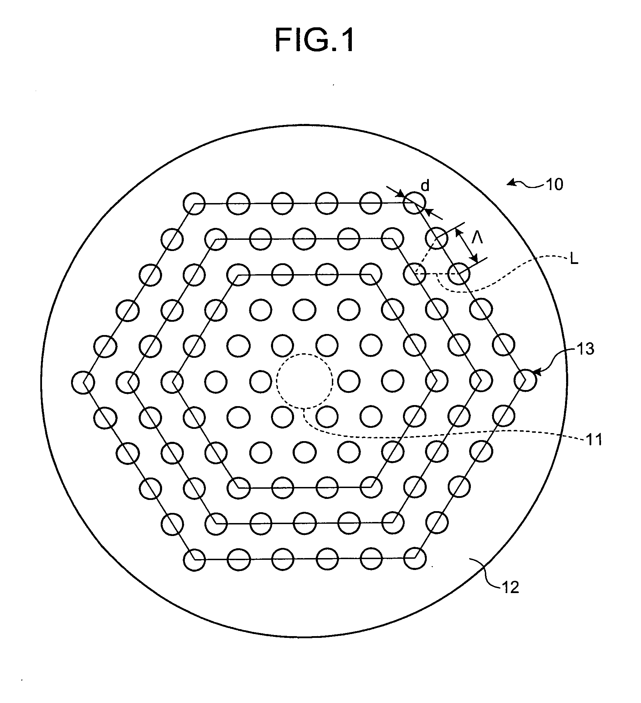

Fig. 1 is a schematic sectional view of an HF according to an embodiment of the present invention. As shown in Fig. 1, the HF 10 includes a core region 11 at a center of the HF 10 and a cladding region 12 surrounding the core region 11. The core region 11 and the cladding region 12 are made of pure silica glass into which no dopant for adjusting a refractive index is doped.

The cladding region 12 contains air holes 13 arranged in a layered structure around the core region 11. The air holes 13 that form vertices of a regular hexagon around the core region 11 are assumed to be in the first layer. The air holes 13 are arranged not only in the layered structure but also in a triangular lattice L. A diameter of each of the air holes 13 is represented by d and a lattice constant of the triangular lattice L, that is, a pitch between centers of the air holes 13 is represented by Λ.

The HF 10 is configured such that, when Λ is set in a range from 2 µm to 5 µm and d/Λ is set in a range from 0.3 to 0.75, a wavelength dispersion value at the wavelength of 1050 nm is to be a value in a range from -10 ps/nm/km to 10 ps/nm/km. Thus, because an absolute value of the wavelength dispersion value in the wavelength band of 1.0 µm becomes sufficiently small, the HF 10 can be suitable for an optical transmission line for a long-haul optical transmission in the wavelength band of 1.0 µm. Meanwhile, if a transmission speed of an optical signal is set to 40 Gbps, an absolute value of cumulative wavelength dispersion of an optical transmission line per span needs to be set to about 100 ps/nm or smaller. Thus, with a use of the HF 10, a long-haul optical transmission line of 10 km or longer per span can be configured.

Because an absolute value of the wavelength dispersion value in the wavelength band of 1.0 µm is sufficiently small, the HF 10 can be preferably used as an optical fiber in the wavelength band of 1.0 µm such as an optical fiber used for an SC light source or a fiber laser.

Furthermore, because the HF 10 is configured such that the air holes 13 having uniform diameters are arranged in a triangular lattice, which is the same as in a conventional HF, the HF 10 can be easily manufactured by using a conventional stack-and-draw method.

Detailed explanation about the present invention is given below based on calculation results obtained through a Finite Element Method (FEM) simulation.

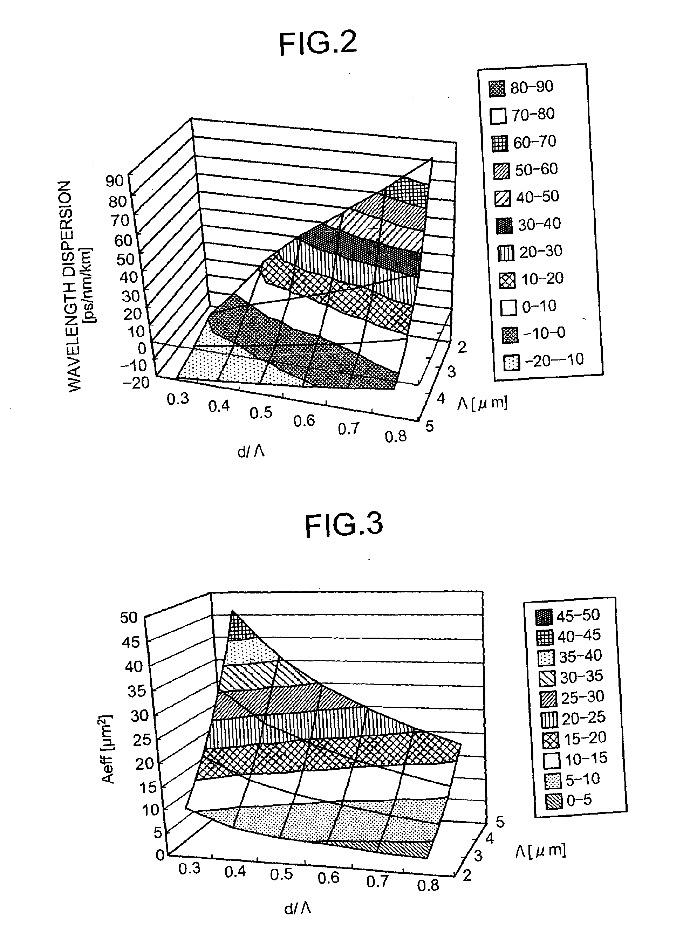

Fig. 2 is a diagram for illustrating variation in a wavelength dispersion value at the wavelength of 1050 nm when the air hole pitch Λ and a ratio d/Λ where d is the hole diameter are changed in the HF 10 shown in Fig. 1. As shown in Fig. 2, a wavelength dispersion value of the HF 10 can be in a range from -10 ps/nm/km to 10 ps/nm/km when Λ is in a range from 2 µm to 5 µm and d/Λ is in a range from 0.3 to 0.75.

Furthermore, Fig. 3 is a diagram for illustrating variation in an effective core area Aeff at the wavelength of 1050 nm when the air hole pitch Λ and the ratio d/Λ are changed in the HF 10. As shown in Fig. 3, the effective core area of the HF 10 can be 10 µm² or larger when Λ is in a range from 2 µm to 5 µm and d/Λ is in a range from 0.3 to 0.75. When the effective core area of the HF 10 is set to 10 µm² or larger, capability of coupling with a conventional optical fiber through fusion splicing can be enhanced.

Referring to Figs. 2 and 3, in every pair of Λ and d/Λ where the wavelength dispersion value at the wavelength of 1050 nm is in a range from -10 ps/nm/km to 10 ps/nm/km and the effective core area is 10 µm² or larger, confinement loss of the HF 10 is 0.1 dB/km or smaller.
This value is so small that overall transmission loss of the HF 10 is little affected.

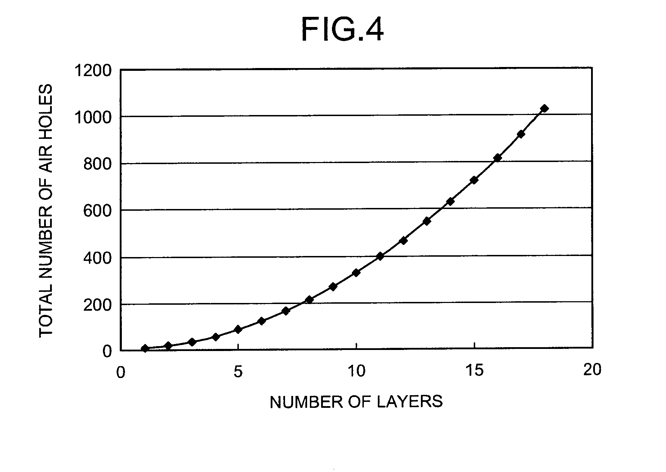

If d/Λ is made smaller, an effect of optical confinement by the air holes 13 is reduced. Therefore, to maintain the confinement loss of 0.1 dB/km or smaller, the number of layers of the air holes 13 needs to be increased. However, if the number of layers is increased while the air holes 13 are arranged in a triangular lattice, the total number of the air holes 13 exponentially increases. Fig. 4 is a diagram for illustrating a relationship between the number of layers of the air holes 13 and the total number of the air holes 13 when the air holes 13 are arranged in a triangular lattice. As shown in Fig. 4, as the number of layers of the air holes 13 increases, the total number of the air holes 13 exponentially increases. Therefore, the number of glass capillaries necessary for manufacturing the HF 10 by a stack-and-draw method also exponentially increases, making a manufacturing process more complicated. Considering that most of conventional HFs have not more than seven layers of air holes, it is preferable to set the number of layers of the air holes 13 to seven or smaller. For obtaining the confinement loss of 0.1 dB/km or smaller while the number of layers of the air holes 13 is set to seven or smaller, d/Λ is preferably set to 0.4 or larger.

If d/Λ is made larger, an effect of optical confinement by the air holes 13 is enhanced. As a result, the HF 10 is likely to achieve multi-mode operation. To achieve single-mode operation in the HF 10 at a wavelength of 1000 nm, d/Λ is preferably set to 0.6 or smaller. When d/Λ of the HF 10 is set in a range from 0.4 to 0.6, if Λ is set in a range from 2.5 µm to 4.5 µm, the wavelength dispersion value at the wavelength of 1050 nm can be in a range from -10 ps/nm/km to 10 ps/nm/km.

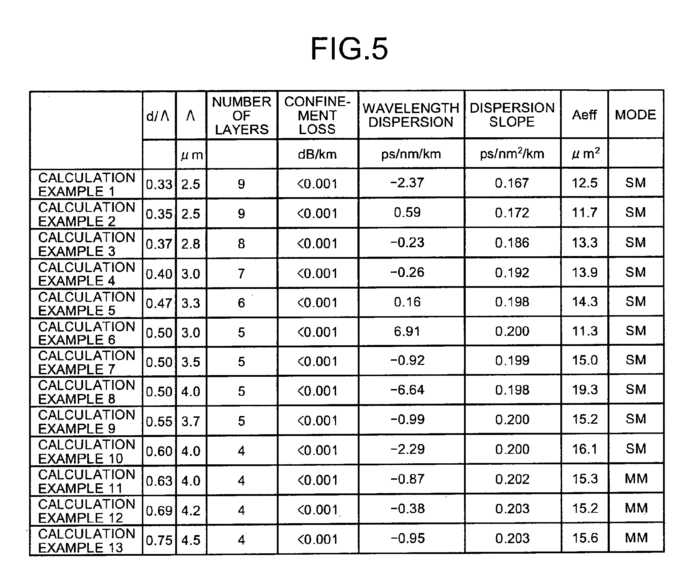

Detailed Calculation Examples are described below. Fig. 5 is a diagram for illustrating design parameters and optical characteristics at the wavelength of 1050 nm with respect to each of HFs having the same structure as that of the HF 10 with different design parameters d/Λ and Λ and the different number of layers of air holes according to Calculation Examples 1 to 13. In Fig. 5, "mode" means a state of a propagation mode of an HF. Specifically, "SM" means that an HF achieves single-mode operation, and "MM" means that an HF achieves multi-mode operation. As shown in Fig. 5, each of the HFs according to Calculation Examples 1 to 13 has a wavelength dispersion value in a range from -10 ps/nm/km to 10 ps/nm/km, confinement loss of smaller than 0.001 dB/km, which is extremely small, and an effective core area of 10 µm² or larger. However, when d/Λ is set to be smaller than 0.4, eight or more layers of the air holes are necessary to set confinement loss to be smaller than 0.001 dB/km. Furthermore, when d/Λ is set to be larger than 0.6, an HF achieves multi-mode operation.

As Example of the present invention, an HF made of pure silica glass and having the same structure as that of the HF 10 shown in Fig. 1 was manufactured by a stack-and-draw method. The design parameters d/Λ and Λ, and the number of layers of air holes were set to the same as those of Calculation Example 7 of Fig. 5.

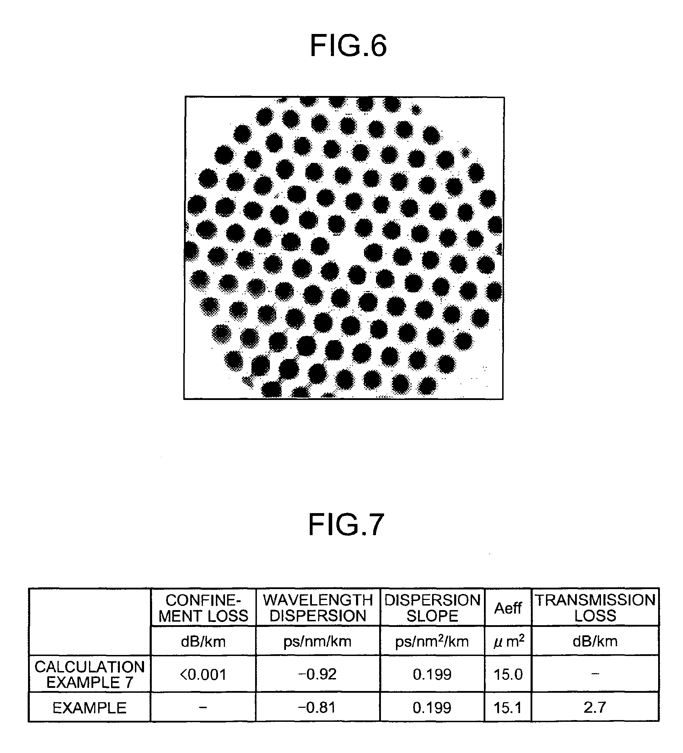

Fig. 6 is a photographic diagram of a cross sectional structure of the HF according to Example of the present invention. As shown in Fig. 6, the HF according to Example of the present invention includes air holes arranged in a triangular lattice, and the number of layers is set to five. By extrapolating Λ and d/Λ from the photograph shown in Fig. 6, it is obtained that Λ is about 3.5 µm and d/Λ is about 0.5, which are substantially the same as the design parameters of Calculation Example 7.

Fig. 7 is a diagram for illustrating optical characteristics of each of the HFs according to Calculation Example 7 of Fig. 5 and Example of the present invention in comparison with each other. As shown in Fig. 7, the optical characteristics of the HF according to Example of the present invention are approximately the same as those obtained by simulation calculation. Furthermore, by measuring an optical field of a light propagating the HF according to Example of the present invention, it was found that a mode other than a base mode was not present, which means that the HF according to Example of the present invention achieves single-mode operation. The HF according to Example of the present invention has transmission loss of 2.7 dB/km that is larger than that of Calculation Example 7. This is partly because a glass is damaged or scattering loss occurs on the surface of the air holes.

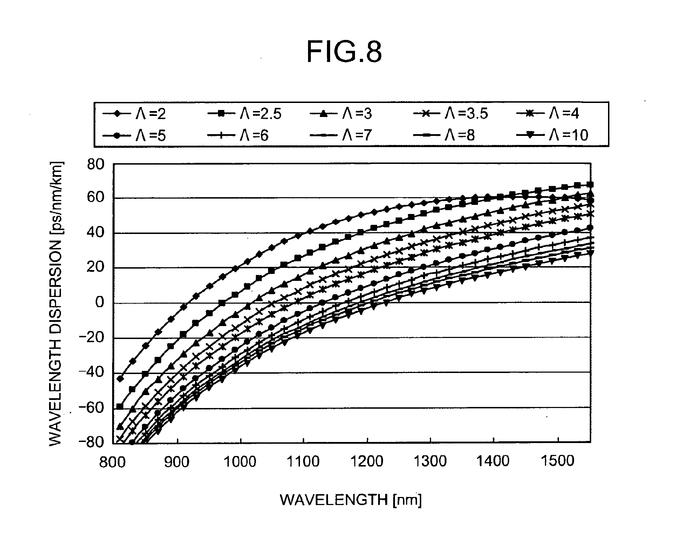

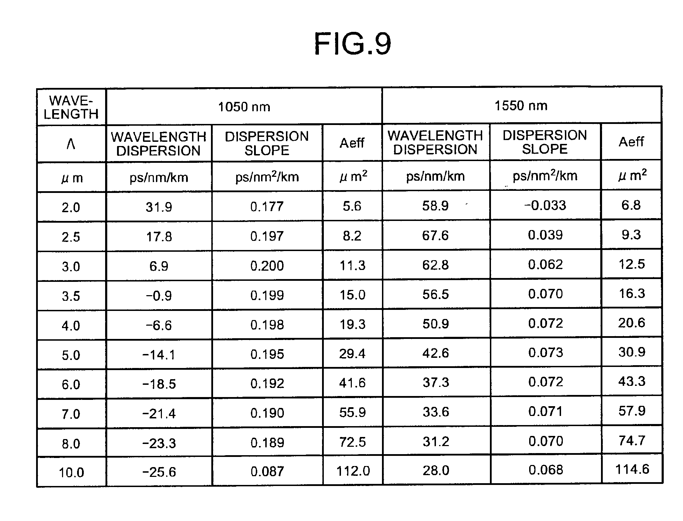

Explanation about variation in characteristics of an HF having five layers of air holes as shown in Fig. 1 when d/Λ is set to 0.50 that is nearly the most optimal value and Λ is changed is described below based on calculation results from simulations. Fig. 8 is a diagram for illustrating wavelength dispersion characteristics of the HF shown in Fig. 1 when d/Λ is set to 0.50 and Λ is changed from 2.0 µm to 10.0 µm. Fig. 9 is a diagram for illustrating the characteristics at wavelengths of 1050 nm and 1550 nm.

As shown in Figs. 8 and 9, as Λ is made smaller, a zero-dispersion wavelength is gradually shifted towards shorter wavelengths. When Λ is set to around 3.5 µm, the zero-dispersion wavelength reaches 1050 nm. Furthermore, when Λ is set to 3.5 µm, a dispersion slope is about 0.20 ps/nm²/km and an effective core area is about 15 µm².
Moreover, when Λ is set to 3.5 µm, confinement loss of 0.01 dB/km or smaller is obtained at wavelengths of 1050 nm and 1550 nm. Thus, it is confirmed that low confinement loss can be attained over a broadband. Furthermore, it is confirmed that wavelength dispersion at the wavelength of 1050 nm can be minute dispersion with a positive or a negative value of ±10 ps/nm/km or smaller by setting Λ to 3.0 µm or 4.0 µm.

### INDUSTRIAL APPLICABILITY

The present invention can be preferably applied to an optical transmission line for a long-haul optical transmission in the wavelength band of 1.0 µm.

## Claims

1. A holey fiber comprising:
a core region formed at a center; and
a cladding region formed on an outer circumference of the core region, the cladding region having a plurality of air holes arranged in a layered structure around the core region, wherein
the air holes are arranged in a triangular lattice so that a wavelength dispersion value at a wavelength of 1050 nm is in a range from -10 ps/nm/km to 10 ps/nm/km when Λ is in a range from 2 µm to 5 µm and d/Λ is in a range from 0.3 to 0.75, where d [µm] is hole diameter of each of the air holes and Λ [µm] is lattice constant of the triangular lattice.

2. The holey fiber according to claim 1, wherein
Λ is in a range from 2.5 µm to 4.5 µm,
d/Λ is in a range from 0.4 to 0.6,
number of layers of the air holes is equal to or smaller than seven,
confinement loss at the wavelength of 1050 nm is equal to or lower than 0.1 dB/km, and
a single-mode operation is achieved at a wavelength of 1000 nm.

3. The holey fiber according to claim 1 or 2, wherein
an effective core area at the wavelength of 1050 nm is equal to or larger than 10 µm².
